# EUROPEAN PATENT APPLICATION

(11) **EP 2 009 319 A2**
(43) Date of publication of application: **31.12.2008**
(21) Application number: 08159324.6
(22) Date of filing: 30.06.2008
(51) Int. Cl.: F16F 9/06

(54) **Shock absorber**

(30) Priority: 29.06.2007 JP 2007173428
(71) Applicant: Hitachi Ltd., Chiyoda-ku Tokyo 100-8280 (JP)
(72) Inventor: Murakami, Hiroshi c/o IPD, Automotive Systems Hitachi, Ltd., Kanagawa (JP)
(74) Representative: Schwabe - Sandmair - Marx

(57) **Abstract**

A shock absorber (1) includes a piston (5) coupled to a hollow piston rod (6) fitted in a cylinder (2) and a reservoir (4) disposed at an outer periphery portion of the cylinder. A rod chamber (24) in the piston rod communicates with a piston chamber (13) in the piston via a radial passage (25). A hollow rod (28) fixed to a partition wall member (27) is inserted into the piston rod and the rod chamber is connected to the reservoir by the hollow rod. An extension-side disk valve (16) generates damping force during an extension stroke of the piston rod and a compression-side disk valve (21) generates damping force during a compression stroke. Because the hollow rod connects the rod chamber to the reservoir at the outer periphery of the cylinder, it is possible to secure sufficient reservoir capacity.

## Description

### BACKGROUND OF THE INVENTION

### 1. Field of the Invention

The present invention relates to a shock absorber mounted on a suspension system or the like of a vehicle such as an automobile.

### 2. Description of the Related Art

In general, a tube type hydraulic shock absorber mounted on a suspension system of an automobile is formed by fitting a piston coupled to a piston rod into a cylinder filled with oil so that the piston can slide, and providing a damping force generating mechanism formed of an orifice, a disk valve, and the like in the piston. The damping force generating mechanism controls a flow of the oil generated by sliding of the piston in the cylinder caused by a stroke of the piston rod to thereby generate damping force. A reservoir filled with the oil and gas may be connected to a bottom portion of the cylinder with a base valve interposed therebetween, or alternatively, a free piston may be fitted in a bottom portion side of the cylinder to form a gas chamber. Thus contraction and expansion of the gas inside the reservoir or the gas chamber compensate for changes in the capacity of the cylinder caused by entrance and recession of the piston rod and changes in volume of the oil due to temperature changes.

Another type of tube type hydraulic shock absorber is also known, as disclosed in Japanese Patent Application Laid-open No. 52-113475, for example. This one has a reservoir is disposed inside the piston rod. Upper and lower cylinder chambers divided by the piston are connected to the reservoir in the piston rod via extension-side and compression-side damping force generating mechanisms provided in the piston.

With this structure, the base valve between the cylinder chamber and the reservoir can be omitted. Moreover, the damping force is generated by only the extension-side damping force generating mechanism during the extension stroke of the piston rod and by only the compression-side damping force generating mechanism during the compression stroke. Accordingly, damping force characteristics of the extension side and the compression side do not affect each other, which increases a degree of freedom in setting the damping force characteristics. Furthermore, cavitation is less likely to occur and gas pressure in the reservoir need not be high. Therefore, reduction in durability of seal portions and increase in friction become less liable to occur.

However, the above-described conventional hydraulic shock absorber provided with the reservoir in the piston rod has the following problem. Because the capacity in the piston rod is limited, it is needed to dispose the reservoir outside and extend a pipe from a tip end portion of the piston rod to be connected to the outside reservoir so as to secure sufficient reservoir capacity. This considerably restricts space and layout and increases manufacturing cost.

### SUMMARY OF THE INVENTION

The present invention has been made in light of the above circumstances and it is an object of the invention to provide a shock absorber with which sufficient capacity of a reservoir can be secured while utilizing an inside of a piston rod as the reservoir.

In one embodiment of the present invention, a shock absorber includes: a cylinder filled with a fluid; a piston slidably fitted in the cylinder and dividing an interior of the cylinder into two chambers; a hollow piston rod having one end coupled to the piston and the other end extending outside from one end portion of the cylinder; an extension-side passage and a compression-side passage provided to the piston, each of the passages connecting the two chambers in the cylinder; an extension-side damping valve provided at an upstream side of the extension-side passage to generate damping force during an extension stroke of the piston rod; an extension-side check valve provided at a downstream side of the extension-side passage to allow only a flow of the fluid during the extension stroke of the piston rod; a compression-side damping valve provided at an upstream side of the compression-side passage to generate damping force during a compression stroke of the piston rod; a compression-side check valve provided at a downstream side of the compression-side passage to allow only a flow of the fluid during the compression stroke of the piston rod; a connecting path for connecting a portion of the extension-side passage between the extension-side damping valve and the extension-side check valve and a portion of the compression-side passage between the compression-side damping valve and the compression-side check valve to an inside of the piston rod; a hollow rod provided in the cylinder and having one end slidably and liquid-tightly inserted into the piston rod; and a reservoir connected to the other end portion of the hollow rod.

In the shock absorber, a partition wall member for separating the chamber in the cylinder from the reservoir may be provided at the other end portion side of the cylinder and the hollow rod may be coupled to the partition wall member.

The hollow rod may be inclinably coupled to the partition wall member.

The hollow rod and the partition wall member may be formed integrally.

The partition wall member may be provided with a check valve for allowing only a flow of the fluid from the reservoir to the chamber in the cylinder.

The hollow rod may be inclinably inserted into the piston rod.

The reservoir may be disposed at an outer periphery portion of the cylinder.

The shock absorber may include a return passage for returning the fluid leaking from the cylinder through a seal portion between the one end portion of the cylinder and the piston rod, and a check valve for allowing only a flow of the fluid in the return passage from the cylinder side to the reservoir side.

The reservoir may be disposed on the other end side of the cylinder.

The reservoir may be divided into an oil chamber and a gas chamber by a dividing means.

The shock absorber may include a throttle means for throttling a flow path area of the connecting path.

The piston may be a split structure in which the piston is split into two parts in an axial direction and the connecting path may be formed at split surfaces.

With the shock absorber according to the invention, during the extension stroke of the piston rod, the fluid flows from one of the cylinder chambers, passes through the extension-side passage, and flows into the other cylinder chamber via the extension-side damping valve and the extension-side check valve. At this time, the fluid in an amount corresponding to recession of the piston rod from the interior of the cylinder flows from the reservoir to the other cylinder chamber via the hollow rod, the inside of the piston rod, the connecting path, the extension-side passage, and the extension-side check valve to compensate for the change in capacity of the cylinder. During the compression stroke, the fluid flows from the other cylinder chamber, passes through the compression-side passage, and flows into the one cylinder chamber via the compression-side passage, the compression-side damping valve, and the compression-side check valve. At this time, the fluid in an amount corresponding to entrance of the piston rod into the cylinder flows from the compression-side passage to the reservoir via the connecting path, the inside of the piston rod, and the hollow rod to compensate for the change in capacity of the cylinder. Because the inside of the piston rod communicates with the reservoir via the hollow rod in the cylinder, it is possible to secure sufficient capacity of the reservoir.

### BRIEF DESCRIPTION OF THE DRAWINGS

FIG. 1 is a vertical sectional view of a shock absorber according to a first embodiment of the present invention;
FIG. 2 is a vertical sectional view of an essential portion showing a first variation of a structure of a sliding portion between a piston rod and a hollow rod of the shock absorber shown in FIG. 1;
FIG. 3 is a vertical sectional view of the essential portion showing a second variation of the structure of the sliding portion between the piston rod and the hollow rod of the shock absorber shown in FIG. 1;
FIG. 4 is a vertical sectional view of the essential portion showing a third variation of the structure of the sliding portion between the piston rod and the hollow rod of the shock absorber shown in FIG. 1;
FIG. 5 is a vertical sectional view of an essential portion showing a first variation of a coupling structure of a partition wall member and the hollow rod of the shock absorber shown in FIG. 1;
FIG. 6 is a vertical sectional view of the essential portion showing a second variation of the coupling structure of the partition wall member and the hollow rod of the shock absorber shown in FIG. 1;
FIG. 7 is a vertical sectional view of the essential portion showing a third variation of the coupling structure of the partition wall member and the hollow rod of the shock absorber shown in FIG. 1;
FIG. 8 is a vertical sectional view of a shock absorber according to a second embodiment of the invention;
FIG. 9 is a vertical sectional view of an essential portion showing a first variation of a coupling structure of a partition wall member and a hollow rod of the shock absorber shown in FIG. 8;
FIG. 10 is a vertical sectional view of the essential portion showing a second variation of the coupling structure of the partition wall member and the hollow rod of the shock absorber shown in FIG. 8;
FIG. 11 is a vertical sectional view of a piston that is an essential portion of a shock absorber according to a third embodiment of the invention taken along a line Z-Y in FIG. 13;
FIG. 12 is a vertical sectional view of the piston that is the essential portion of the shock absorber according to the third embodiment of the invention taken along a line Z-Z in FIG. 13;
FIG. 13 is a top view of a first piston half body of the shock absorber shown in FIG. 11;
FIG. 14 is a bottom view of the first piston half body of the shock absorber shown in FIG. 11; and
FIG. 15 is a top view of a second piston half body of the shock absorber shown in FIG. 11.

### DESCRIPTION OF THE PREFERRED EMBODIMENTS

Embodiments of the present invention will be described in detail below based on the drawings.

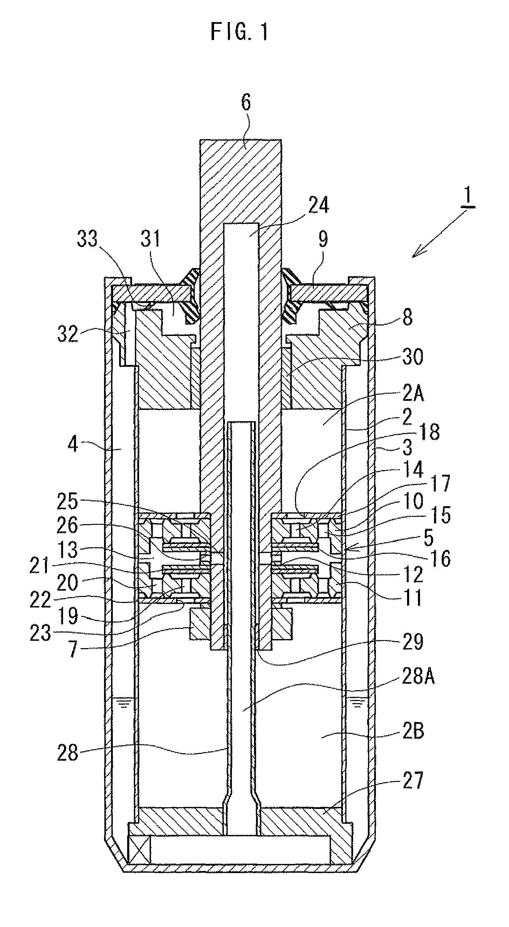

The first embodiment of the invention will be described with reference to FIG. 1. As shown in FIG. 1, a shock absorber 1 according to the present embodiment is a tube type hydraulic shock absorber having a double tube structure including an outer tube substantially in a shape of a bottomed cylinder and provided to an outer periphery of a cylinder 2 and an annular reservoir 4 formed between the cylinder 2 and the outer tube 3. A piston 5 is slidably fitted in the cylinder 2. The piston 5 divides an interior of the cylinder 2 into two chambers, i.e., a cylinder upper chamber 2A and a cylinder lower chamber 2B. A base end portion of a hollow piston rod 6 is coupled to the piston 5 by a nut 7 and the other end side of the piston rod 6 is inserted through a rod guide 8 and a rod seal 9 mounted to opening ends of the cylinder 2 and the outer tube 3 and extends outside. Oil (fluid) is filled in the cylinder 2 hermetically sealed with the rod guide 8 and the rod seal 9 and oil and gas (or the air) are filled in the reservoir 4.

The piston 5 is formed by axially piling two annular piston valve members 10, 11 fitted in the cylinder 2 with a spacer 12 interposed therebetween and inserting a small-diameter portion of the end portion of the piston rod 6 therethrough, and integrally coupling the piston rod 6 to the piston valve members 10, 11 with the nut 7. A piston chamber 13 is formed between the two piston valve members 10, 11.

The upper piston valve member 10 of the piston 5 is provided with a plurality of extension-side passages 14 disposed on an inner periphery side and a plurality of compression-side passages 15 disposed on an outer periphery side to connect the cylinder upper chamber 2A and the piston chamber 13. An end face of the piston valve member 10 on the piston chamber 13 side is provided with an extension-side disk valve 16 (extension-side damping valve) for controlling a flow of oil in the extension-side passages 14 from the cylinder upper chamber 2A to the piston chamber 13 to generate damping force. An end face of the piston valve member 10 on the cylinder upper chamber 2A side is provided with a compression-side check valve 17 (disk valve) for allowing only a flow of oil in the compression-side passages 15 from the piston chamber 13 to the cylinder upper chamber 2A. An inner periphery portion of the compression-side check valve 17 is provided with a passage 18 for connecting the extension-side passages 14 to the cylinder upper chamber 2A.

Similarly, the lower piston valve member 11 of the piston 5 is provided with a plurality of compression-side passages 19 disposed on an inner periphery side and a plurality of extension-side passages 20 disposed on an outer periphery side to connect the cylinder lower chamber 2B and the piston chamber 13. An end face of the piston valve member 11 on the piston chamber 13 side is provided with a compression-side disk valve 21 (compression-side damping valve) for controlling a flow of oil in the compression-side passages 19 from the cylinder lower chamber 2B to the piston chamber 13 to generate damping force. An end face of the piston valve member 11 on the cylinder lower chamber 2B side is provided with an extension-side check valve 22 (disk valve) for allowing only a flow of oil in the extension-side passages 20 from the piston chamber 13 to the cylinder lower chamber 2B. An inner periphery portion of the extension-side check valve 22 is provided with a passage 23 for connecting the compression-side passages 19 to the cylinder lower chamber 2B. Because the piston valve members 10, 11 are substantially in the same shape, they can share the same member. If bending moment applied to the piston rod is so large that force couple may act on the piston valve members 10, 11, seal members at outer peripheries of the piston valve members 10, 11 or dimensions of the seal members may be changed to avoid the force couple.

Inside the hollow piston rod 6, a cylindrical rod chamber 24 having an open lower end portion is formed. The rod chamber 24 communicates with the piston chamber 13 through a radial passage 25 (connecting path) formed in a side face of the small-diameter portion at the end portion of the piston rod 6 and a passage 26 formed in the spacer 12. Between a lower end portion of the cylinder 2 and a bottom portion of the outer tube 3, a partition wall member 27 for dividing the cylinder lower chamber 2B and the reservoir 4 from each other is provided. A lower end portion of a hollow rod 28 extending along a center of the cylinder 2 is press-fitted into and fixed to the partition wall member 27 so that a passage 28A in the hollow rod 28 and the reservoir 4 communicate with each other. An upper end portion of the hollow rod 28 is slidably inserted into the rod chamber 24 in the piston rod 6. A lower end portion of the rod chamber 24 is mounted with a bearing member 29 for slidably guiding the hollow rod 28 and providing sealing between the rod chamber 24 and the hollow rod 28 or allowing a slight leakage.

The rod guide 8 is provided with a bearing 30 for slidably supporting the piston rod 6 and a return passage 32 for connecting a chamber 31 between the rod guide 8 and the rod seal 9 to the reservoir 4. The rod seal 9 is mounted with a check valve 33 for allowing only a flow of the oil in the return passage 32 from the chamber 31 to the reservoir 4.

Operation of the embodiment having the above structure will be described next.

During an extension stroke of the piston rod 6, the oil in the cylinder upper chamber 2A is pressurized by a pressure receiving face (the portion excluding the piston rod 6) of an upper end portion of the piston 5, passes through the passage 18 of the compression-side check valve 17 and the extension-side passages 14 formed in the upper piston valve member 10 of the piston 5, opens the extension-side disk valve 16 to flow into the piston chamber 13, further flows from the piston chamber 13 and passes through the extension-side passages 20 formed in the lower piston valve member 11 of the piston 5, and opens the extension-side check valve 22 to flow into the cylinder lower chamber 2B. In this way, the damping force is generated according to an opening degree of the extension-side disk valve 16. At this time, the oil in an amount corresponding to recession of the piston rod 6 from the interior of the cylinder 2 flows from the reservoir 4 and passes through the passage 28A in the hollow rod 28, the rod chamber 24, the radial passage 25 in the piston rod 6, and the passage 26 in the spacer 12 to flow into the piston chamber 13. The gas in the reservoir 4 expands to compensate for the change in capacity of the cylinder 2.

During a compression stroke of the piston rod 6, the oil in the cylinder lower chamber 2B is pressurized by a pressure receiving face of a lower end portion of the piston 5, passes through the passage 23 of the extension-side check valve 22 and the compression-side passages 19 formed in the lower piston valve member 11 of the piston 5, opens the compression-side disk valve 21 to flow into the piston chamber 13, further flows from the piston chamber 13 and passes through the compression-side passages 15 formed in the upper piston valve member 10 of the piston 5, and opens the compression-side check valve 17 to flow into the cylinder upper chamber 2A. In this way, the damping force is generated according to an opening degree of the compression-side disk valve 21. At this time, the oil in an amount corresponding to entrance of the piston rod 6 into the cylinder 2 flows from the piston chamber 13 and passes through the passage 26 in the spacer 12, the radial passage 25 in the piston rod 6, the rod chamber 24, and the passage 28A in the hollow rod 28 to flow into the reservoir 4. Accordingly, the gas in the reservoir 4 is compressed to compensate for the change in capacity of the cylinder 2.

A small amount of oil leaks from the cylinder upper chamber 2A to the chamber 31 through the bearing 30 of the rod guide 8 to lubricate a sliding portion of the piston rod 6 and returns to the reservoir 4 via the check valve 33 and the return passage 32.

As described above, because the damping force is generated by the extension-side disk valve 16 during the extension stroke of the piston rod 6 and the damping force is generated by the compression-side disk valve 21 during the compression stroke, the extension-side and compression-side damping force characteristics do not affect each other, which increases the degree of freedom in setting of the damping force characteristics. Moreover, cavitation is less likely to occur and gas pressure in the reservoir 4 need not be high. Therefore, reduction in durability of seal portions and increase in friction do not occur. Furthermore, by integrally disposing the reservoir 4 at the outer periphery portion of the cylinder 2, sufficient capacity of the reservoir 4 can be secured. The shock absorber can be substantially equal in dimensions compared to the conventional twin tube hydraulic shock absorber and can easily replace it without restricting mounting space and layout.

In the first embodiment, an interior of the reservoir 4 may be divided into an oil chamber and a gas chamber with a flexible membrane (dividing means) such as a diaphragm and a bladder. In this case, the return passage 32 in the rod guide 8 and the check valve 33 in the rod seal 9 are omitted. In this way, the shock absorber 1 can be turned upside down and used as an inverted type.

The partition wall member 27 may be provided with a check valve for allowing only a flow of the oil from the reservoir 4 to the cylinder lower chamber 2B. In this way, it is possible to reduce flow resistance of the oil from the reservoir 4 to the cylinder lower chamber 2B. A throttle means such as an orifice for throttling a flow path area may be provided in the passage 26 in the spacer 12 between the piston chamber 13 and the reservoir 4 or in the radial passage 25 in the piston rod 6 to properly tune the damping force characteristics.

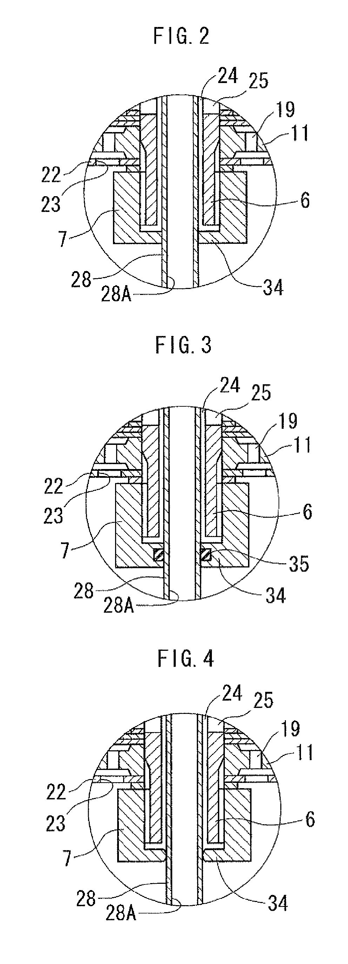

Next, variations of the structure of the sliding portion between the piston rod 6 and the hollow rod 28 in the first embodiment will be described with reference to FIGS. 2 to 4.

As shown in FIG. 2, a bearing portion 34 in sliding contact with an outer periphery portion of the hollow rod 28 may be formed at a lower end portion of the nut 7 in place of the bearing member 29 and the bearing portion 34 may slidably and liquid-tightly guide the hollow rod 28.

As shown in FIG. 3, in the variation in FIG. 2, a seal member 35 such as an O-ring may be further provided to the bearing portion 34.

As shown in FIG. 4, in the variation in FIG. 2, a sliding contact portion of the bearing portion 34 with the hollow rod 28 may be rounded to have a substantially circular section. In this way, inclination of the hollow rod 28 can be allowed.

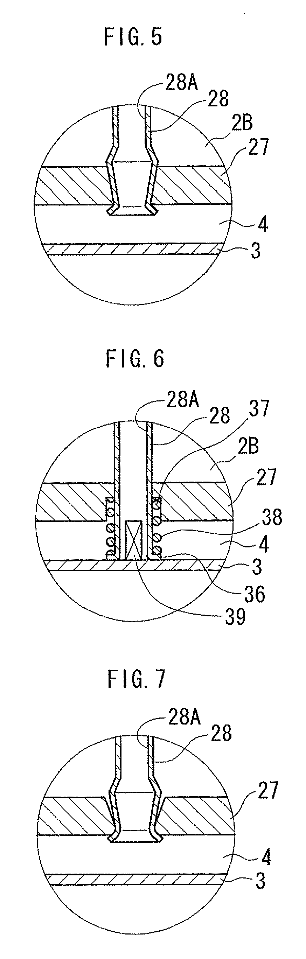

Next, variations of the coupling structure of the partition wall member 27 and the hollow rod 28 in the first embodiment will be described with reference to FIGS. 5 to 7.

In the variation shown in FIG. 5, an opening portion of the partition wall member 27 and the hollow rod 28 are tapered and fitted with each other and a tip end portion of the hollow rod 28 is caulked (diameter is increased) to thereby couple them. In this way, the partition wall member 27 and the hollow rod 28 can be securely coupled and sealed.

In the variation shown in FIG. 6, the hollow rod 28 passes through the partition wall member 27 and a compression coil spring 38 is mounted between an outer flange portion 36 formed at the tip end portion of the hollow rod 28 and an annular groove 37 formed around the opening portion of the partition wall member 27. A side wall of the hollow rod 28 is provided with a passage 39 for connecting the passage 28A in the hollow rod 28 and the reservoir 4 with each other. In this way, the hollow rod 28 can be elastically supported by spring force of the compression coil spring 38 and inclination of the hollow rod 28 can be allowed.

In the variation shown in FIG. 7, an angle of inclination of the tapered portion of the partition wall member 27 is greater than an angle of inclination of the tapered portion of the hollow rod 28 comparing to the variation shown in FIG. 5. In this way, inclination of the hollow rod 28 can be allowed.

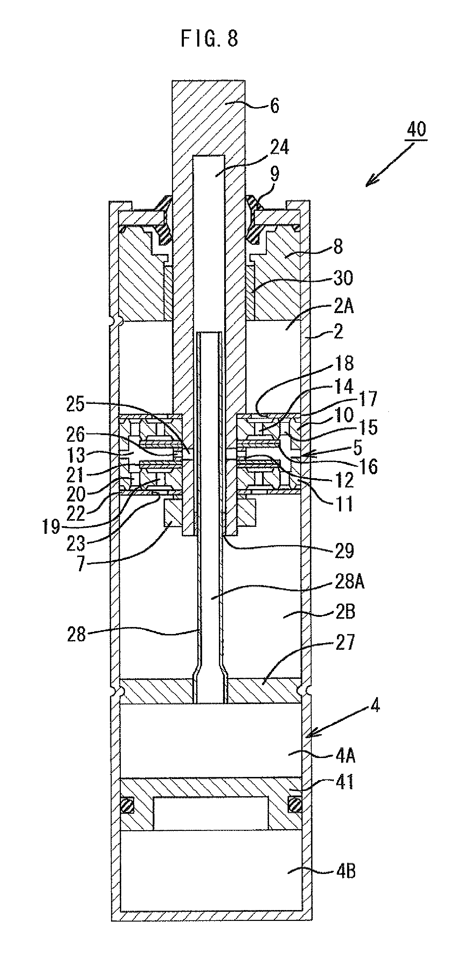

Next, a second embodiment of the invention will be described with reference to FIG. 8. Portions similar to those in the first embodiment will be provided with the same reference numerals and only different portions will be described in detail.

As shown in FIG. 8, a shock absorber 40 according to the present embodiment has a single tube structure in which the outer tube 3 is omitted from the first embodiment, the return passage 32 in the rod guide 8 and the check valve 33 are omitted, and a bottomed cylinder having a closed lower end portion is used as the cylinder 2. The reservoir 4 is formed between a bottom portion of the cylinder 2 and the partition wall member 27.

The reservoir 4 is divided by a free piston 41 (dividing means) slidably fitted in the cylinder 2 into an oil chamber 4A communicating with the passage 28A in the hollow rod 28 and a gas chamber 4B on the bottom portion side of the cylinder 2. The oil chamber 4A is filled with the oil and the gas chamber 4B is filled with the gas. A diaphragm, instead of the free piston 41, may divide the oil chamber 4A and the gas chamber 4B from each other. The rod guide 8 and the partition wall member 27 fitted in the cylinder 2 are fixed in an axial direction by crimping (reducing a diameter of) the side wall of the cylinder 2.

With the above structure, operations and effects similar to those of the first embodiment can be exerted. Because the single tube structure in which the reservoir 4 is disposed in the bottom portion of the cylinder 2 is employed in the present embodiment, sufficient capacity of the reservoir 4 can be secured. The shock absorber can be substantially equal in dimensions to the conventional single tube type hydraulic shock absorber and can easily replace it without restricting mounting space and layout. In the present embodiment, the structures in the variations shown in FIGS. 2 to 4 can also be employed similarly to the first embodiment.

In the embodiment, the shock absorber 40 can be turned upside down and used as an inverted type with the piston rod 6 protruding from the lower end portion of the cylinder 2. In this case, the free piston 41 may be omitted.

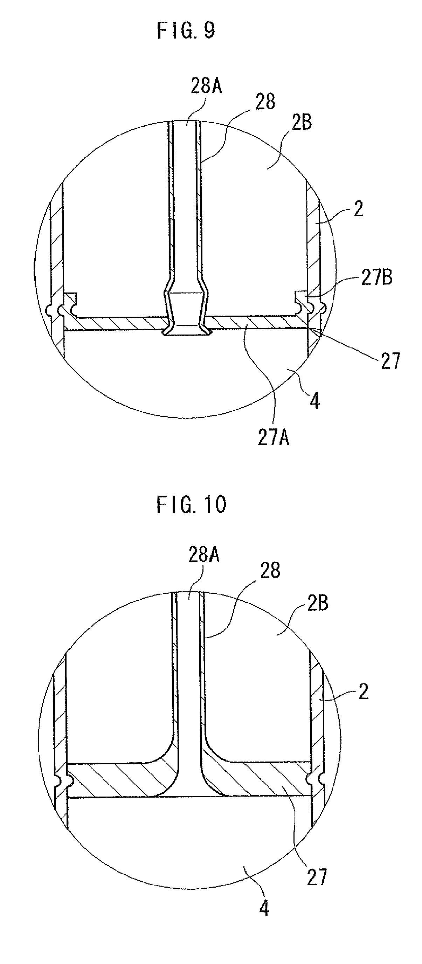

Next, variations of the coupling structure of the partition wall member 27 and the hollow rod 28 of the second embodiment will be described with reference to FIG. 9 and 10.

In the variation shown in FIG. 9, the partition wall member 27 is formed by pressing plates into a shape of a bottomed cylinder having a disk-shaped bottom portion 27A and a cylindrical side face portion 27B. The partition wall member 27 is fixed in the axial direction by crimping the side face portion 27B of the partition wall member 27 and the side wall of the cylinder 2 outward. Similarly to the variation shown in FIG. 5, the opening portion of the partition wall member 27 and the hollow rod 28 are tapered and fitted with each other and the tip end portion of the hollow rod 28 is crimped (diameter is increased) to thereby couple the partition wall member 27 and the hollow rod 28.

In the variation shown in FIG. 10, the partition wall member 27 and the hollow rod 28 are integrally formed by deep-drawing metal or integrally formed of high-strength resin or the like. In this way, the number of parts can be reduced. Moreover, it is possible to reliably provide sealing between the partition wall member 27 and the hollow rod 28.

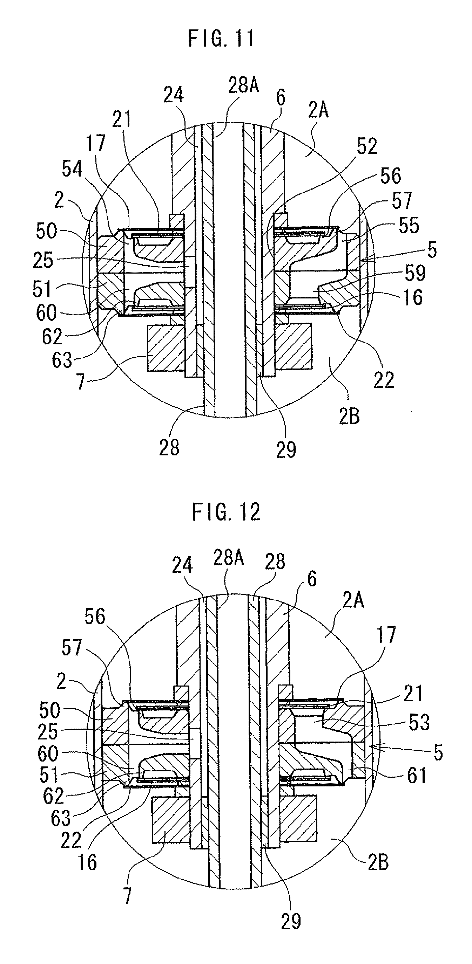

Next, a third embodiment of the invention will be described with reference to FIGS. 11 to 15. Since the present embodiment is similar to the first and second embodiments except that the structure of the piston is different, portions similar to those in the first and second embodiments will be provided with the same reference numerals and only different portions will be described in detail in the following description.

As shown in FIGS. 11 to 15, in a shock absorber according to the present embodiment, the piston 5 has a structure split into upper and lower parts and formed by coupling an upper first piston half body 50 and a lower second piston half body 51.. The first piston half body 50 is formed at its central portion with a rod hole 52 through which the piston rod 6 is inserted. A plurality of (four in the drawings) compression-side passages 53 disposed along a circumferential direction at an outer periphery of the rod hole 52 pass through the first piston half body 50 in the axial direction. At an outer periphery of the compression-side passages 53, a pair of rectangular passages 54 disposed along a diameter direction at different positions from the compression-side passages 53 passes through the first piston half body 50 in the axial direction. Furthermore, at an outer periphery of the passages 54, a plurality of (four in the drawings) rectangular inlet passages 55 disposed along the circumferential direction and between the compression-side passages 53 and the passages 54 pass through the first piston half body 50 in the axial direction.

On an upper end face of the first piston half body 50, an annular seat portion 56 protrudes between openings of the compression-side passages 53 and openings of the passages 54 and an annular seat portion 57 protrudes between the openings of the passages 54 and openings of the inlet passages 55. The outer seat portion 57 protrudes higher than the inner seat portion 56.

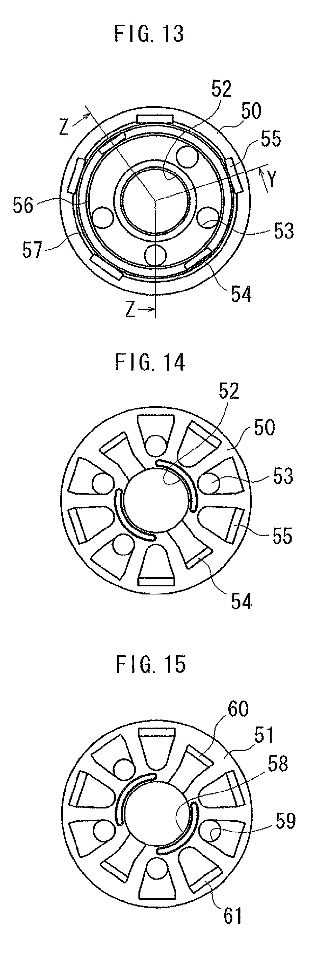

As shown in FIG. 14, at a face coupled to the second piston half body 51, the opening portions of the compression-side passages 53 extend radially outward to positions of the inlet passages 55, the opening portions of the passages 54 extend radially inward to the rod hole 52, and the inlet passages 55 extend radially inward to the positions of the compression-side passages 53.

The second piston half body 51 has substantially the same shape as the above-described first piston half body 50 and is formed at its central portion with a rod hole 58 through which the piston rod 6 is inserted. A plurality of (four in the drawings) extension-side passages 59 disposed along a circumferential direction at an outer periphery of the rod hole 58 pass through the second piston half body 51. in the axial direction. At an outer periphery of the extension-side passages 59, a pair of rectangular passages 60 disposed along a diameter direction at different positions from the extension-side passages 59 passes through the second piston half body 51 in the axial direction. Furthermore, at an outer periphery of the passages 60, a plurality of (four in the drawings) rectangular inlet passages 61 disposed along the circumferential direction and between the extension-side passages 59 and the passages 60 pass through the second piston half body 51 in the axial direction.

On a lower end face of the second piston half body 51, an annular seat portion 62 protrudes between openings of the extension-side passages 59 and openings of the passages 60 and an annular seat portion 63 protrudes between the openings of the passages 60 and openings of the inlet passages 61. The outer seat portion 63 protrudes higher than the inner seat portion 62.

As shown in FIG. 15, at a face coupled to the first piston half body 50, the opening portions of the extension-side passages 59 extend radially outward to positions of the inlet passages 61, the opening portions of the passages 60 extend radially inward to the rod hole 58, and the inlet passages 61 extend radially inward to the positions of the extension-side passages 59.

As a result, when the first piston half body 50 and the second piston half body 51 are coupled, the compression-side passages 53 and the inlet passages 61 communicate with each other, the passages 54 and the passages 60 communicate with each other, these passages 54, 60 (connecting paths) further communicate with the radial passage 25 in the piston rod 6, and the inlet passages 55 and the extension-side passages 59 communicate with each other at their coupled faces (split surfaces). The compression-side disk valve 21 is seated on the inner seat portion 56 of the first piston half body 50, the compression-side check valve 17 is seated on the outer seat portion 57, the extension-side disk valve 16 is seated on the inner seat portion 62 of the second piston half body 51, and the extension-side check valve 22 is seated on the outer seat portion 63.

Operation of the embodiment having the above structure will be described next.

With reference to FIG. 11, during an extension stroke of the piston rod 6, the oil in the cylinder upper chamber 2A is pressurized, passes through the inlet passages 55 and the extension-side passages 59, and opens the extension-side disk valve 16 and the extension-side check valve 22 to flow into the cylinder lower chamber 2B. In this way, the damping force is generated according to the opening degree of the extension-side disk valve 16. At this time, the oil in an amount corresponding to recession of the piston rod 6 from the interior of the cylinder 2 flows from the reservoir 4, passes through the passage 28A in the hollow rod 28, the rod chamber 24, the radial passage 25 in the piston rod 6, and the passages 60, opens the extension-side check valve 22 to flow into the cylinder lower chamber 2B. Accordingly, the gas in the reservoir 4 is expanded to compensate for the change in capacity of the cylinder 2.

With reference to FIG. 12, during a compression stroke of the piston rod 6, the oil in the cylinder lower chamber 2B is pressurized, passes through the inlet passages 61 and the compression-side passages 53, and opens the compression-side disk valve 21 and the compression-side check valve 17 to flow into the cylinder upper chamber 2A. In this way, the damping force is generated according to an opening degree of the compression-side disk valve 21. At this time, the oil in an amount corresponding to entrance of the piston rod 6 into the cylinder 2 flows from the passages 54 and passes through the radial passage 25 in the piston rod 6, the rod chamber 24, and the passage 28A in the hollow rod 28 to flow into the reservoir 4. Accordingly, the gas in the reservoir 4 is compressed to compensate for the change in capacity of the cylinder 2.

In this way, operations and effects similar to those of the first embodiment can be exerted. Moreover, the structure of the piston 5 can be simplified as compared with those in the first and second embodiments.

## Claims

1. A shock absorber comprising:
a cylinder filled with a fluid;
a piston slidably fitted in the cylinder and dividing an interior of the cylinder into two chambers;
a hollow piston rod having one end coupled to the piston and the other end extending outside from one end portion of the cylinder;
an extension-side passage and a compression-side passage provided to the piston, each of the passages connecting the two chambers in the cylinder;
an extension-side damping valve provided at an upstream side of the extension-side passage to generate damping force during an extension stroke of the piston rod;
an extension-side check valve provided at a downstream side of the extension-side passage to allow only a flow of the fluid during the extension stroke of the piston rod;
a compression-side damping valve provided at an upstream side of the compression-side passage to generate damping force during a compression stroke of the piston rod;
a compression-side check valve provided at a downstream side of the compression-side passage to allow only a flow of the fluid during the compression stroke of the piston rod;
a connecting path for connecting a portion of the extension-side passage between the extension-side damping valve and the extension-side check valve and a portion of the compression-side passage between the compression-side damping valve and the compression-side check valve to an inside of the piston rod;
a hollow rod provided in the cylinder and having one end slidably and liquid-tightly inserted into the piston rod; and
a reservoir connected to the other end portion of the hollow rod.

2. The shock absorber according to claim 1, wherein a partition wall member for separating the chamber in the cylinder from the reservoir is provided on the other end portion side of the cylinder and the hollow rod is coupled to the partition wall member.

3. The shock absorber according to claim 2, wherein the hollow rod is inclinably coupled to the partition wall member.

4. The shock absorber according to claims 2 or 3, wherein the hollow rod and the partition wall member are formed integrally.

5. The shock absorber according to any one of claims 2 to 4, wherein the partition wall member is provided with a check valve for allowing only a flow of the fluid from the reservoir to the chamber in the cylinder.

6. The shock absorber according to any one of claims 1 to 5, wherein the hollow rod is inclinably inserted into the piston rod.

7. The shock absorber according to any one of claims 1 to 6, wherein the reservoir is disposed at an outer periphery portion of the cylinder.

8. The shock absorber according to claim 7, further comprising a return passage for returning the fluid leaking from the cylinder through a seal portion between the one end portion of the cylinder and the piston rod, and a check valve for allowing only a flow of the fluid in the return passage from the cylinder side to the reservoir side.

9. The shock absorber according to any one of claims 1 to 6, wherein the reservoir is disposed on the other end side of the cylinder.

10. The shock absorber according to any one of claims 1 to 9, wherein the reservoir is divided into an oil chamber and a gas chamber by a dividing means.

11. The shock absorber according to any one of claims 1, to 10, further comprising a throttle means for throttling a flow path area of the connecting path.

12. The shock absorber according to any one of claims 1 to 11, wherein the piston has a split structure in which the piston is split into two parts in an axial direction and the connecting path is formed at split surfaces.
